# EUROPÄISCHE PATENTANMELDUNG

(11) **EP 0 999 091 A1**
(43) Veröffentlichungstag der Anmeldung: **10.05.2000**
(21) Anmeldenummer: 99250355.7
(22) Anmeldetag: 08.10.1999
(51) Int. Cl.: B60N 2/00

(54) **Einrichtung zur Erkennung der Belegung eines Kraftfahrzeugsitzes**

(30) Priorität: 05.11.1998 DE 19852541
(71) Anmelder: Brose Fahrzeugteile GmbH & Co. KG Coburg, 96450 Coburg (DE)
(72) Erfinder: Heinrich, Peter, 98553 Hinternah (DE); Angermüller, Jürgen, 96298 Mitwitz (DE); Hampel, Klaus, 96450 Coburg (DE)
(74) Vertreter: Baumgärtel, Gunnar

(57) **Zusammenfassung**

Die Erfindung betrifft eine Einrichtung zur Erkennung der Belegung eines Kraftfahrzeugsitzes, der mindestens eine durch einen elektrischen Antrieb betätigbare Verstelleinrichtung umfaßt. Erfindungsgemäß sind hierzu Mittel (2) zum Auslösen der Verstelleinrichtung zum Zweck der Erkennung der Sitzbelegung sowie Mittel zur Bestimmung eines charakteristischen Verhaltens der Verstelleinrichtung, das von der Belegung des Sitzes abhängig ist, vorgesehen.

## Beschreibung

Die Erfindung betrifft eine Einrichtung zur Erkennung der Belegung eines Kraftfahrzeugsitzes nach dem Oberbegriff des Patentanspruchs 1.

Einrichtungen zur Erkennung der Belegung eines Kraftfahrzeugsitzes gewinnen mit der zunehmenden Ausstattung von Kraftfahrzeugen mit Airbags immer mehr an Bedeutung. Denn die Auslösung eines Airbags in einem Crash-Fall ist nur dann sinnvoll, wenn der dem entsprechenden Airbag zugeordnete Fahrzeugsitz tatsächlich mit einem Insassen des Fahrzeugs belegt ist. Die Auslösung eines Airbags, der einem nicht belegten Sitz zugeordnet ist, verursacht demgegenüber unnötige Kosten.

Zudem werden Einrichtungen zur Erkennung der Belegung eines Kraftfahrzeugsitzes häufig in Taxis verwendet, um eine automatische Abrechnung bzw. eine automatische Kontrolle der Abrechnung durchführen zu können.

Die bekannten Einrichtungen zur Erkennung der Belegung eines Kraftfahrzeugsitzes umfassen in der Regel mindestens einen Sensor zur Detektion einer auf dem Sitz befindlichen Person.

Eine aus der DE 94 16 933 U1 bekannte Einrichtung der genannten Art weist einen verformbaren Körper auf, der unterhalb des Sitzkissens des Fahrzeugsitzes angeordnet ist und der bei Belegung des Sitzes aufgrund des Gewichtes der auf dem Sitz befindlichen Person verformt wird. Mittels eines Wandlers wird aus der Verformung ein elektrisches Signal erzeugt, welches eine Belegung des entsprechenden Sitzes anzeigt.

Aus der DE 196 02 089 A1 ist eine Vorrichtung zur Sitzbelegungserkennung mit einem ein Schaumteil aufweisenden Fahrzeugsitz bekannt, wobei in dem Schaumteil ein deformierbarer Körper eingebettet ist, der bei Belastung des Sitzes eine Längenänderung in mindestens einer seiner Achsen erfährt oder einen in dem Körper integrierten Schalter betätigt.

Bei anderen bekannten Einrichtungen zur Erkennung der Sitzbelegung wird in der unmittelbaren Umgebung des Sitzes ein Sensor, wie z.B. ein Bewegungssensor oder ein wärmeempfindlicher Sensor, angeordnet, der eine auf dem entsprechenden Sitz befindliche Person unmittelbar detektiert.

So ist aus der DE 44 33 601 C1 ein Verfahren zur Aktivierung bzw. Deaktivierung sicherheitsrelevanter Systeme, wie z.B. von Airbags eines Kraftfahrzeugs, bekannt, bei dem das von einem auf den möglichen Kopf- oder Schulterbereich des jeweiligen Sitzes fokussierten Sensor erzeugte Signal, das die Benutzung eines Sitzes anzeigt, bewertet und die Funktion des sicherheitsrelevanten Systems zum Zwecke der Herstellung seiner Präventivfunktion aktiviert wird.

Aus der DE 195 47 842 A1 ist ein Verfahren zur Belegungserkennung von Fahrzeugsitzen bekannt, bei dem zur Feststellung der Belegung des Fahrzeugsitzes mit einem Fahrzeuginsassen zeitabhängige Änderungen der Schwingungsfrequenz eines Schwingkreises ausgewertet werden, dessen Schwingungsfrequenz von einer zwischen Sitz und Karosserie des Fahrzeugs gebildeten Kapazität abhängig ist.

In der DE 44 17 827 C2 ist ein Verfahren zur Detektion der Anwesenheit von Personen auf Fahrzeugsitzen beschrieben, bei dem durch mindestens eine an eine Spannungsquelle angeschlossene Meßelektrode ein elektrisches Feld in der Umgebung des Aufenthaltsortes erzeugt wird und Änderungen der Kapazität der Meßelektrode gemessen werden und bei dem durch mindestens eine weitere, an eine Spannungsquelle angeschlossene Referenzelektrode ein elektrisches Feld außerhalb der unmittelbaren Umgebung des Aufenthaltsortes erzeugt wird und relative Änderungen der Kapazität von Referenz- und Meßelektrode gemessen werden.

In der DE 196 48 268 A1 ist ein Fahrzeugsitz mit einer Steuervorrichtung beschrieben, die einen Aufnehmer zur Sitzbelegungserkennung, einen Aufnehmer zur Positionserkennung des Fahrzeugsitzes, eine gemeinsame Steuerschaltung und eine Energieversorgung für die Steuerschaltung aufweist, wobei der Aufnehmer zur Sitzbelegungserkennung und der Aufnehmer zur Positionserkennung des Fahrzeugsitzes elektrisch leitend mit der Steuerschaltung verbunden sind. Der Aufnehmer zur Sitzbelegungserkennung wird dabei durch einen im Fahrzeugsitzrumpf angeordneten Gewichtssensor, einem Gurtschloßsensor oder kapazitive Sensoren in der Fahrzeuglehne gebildet.

Die bekannten Einrichtungen zur Erkennung der Sitzbelegung haben jeweils den Nachteil, daß zusätzliche Bauelemente, insbesondere Sensoren, erforderlich sind, um eine Aussage über die Sitzbelegung machen zu können. Die Herstellung und Montage dieser zusätzlichen Bauelemente erhöht den Aufwand und die Kosten bei der Fertigung des Sitzes.

Der Erfindung liegt daher die Aufgabe zugrunde, eine Einrichtung zur Erkennung der Sitzbelegung der eingangs genannten Art zu schaffen, die bei einem einfachen Aufbau eine zuverlässige Erkennung der Sitzbelegung ermöglicht.

Diese Aufgabe wird durch die Schaffung einer Einrichtung zur Erkennung der Sitzbelegung mit den Merkmalen des Patentanspruchs 1 gelöst.

Danach umfaßt die erfindungsgemäße Einrichtung zum einen Mittel zum Auslösen einer Verstelleinrichtung des Sitzes zum Zweck der Erkennung der Sitzbelegung und zum anderen Mittel zur Bestimmung eines charakteristischen Verhaltens der Verstelleinrichtung, das von der Belegung des Sitzes abhängig ist.

Das Auslösen der Sitzverstelleinrichtung kann dabei einerseits ausschließlich zum Zweck der Erkennung der Sitzbelegung und andererseits auch zu mehreren Zwecken, also zur tatsächlichen Sitzverstellung und zur gleichzeitigen Erkennung der Sitzbelegung erfolgen.

Die Erfindung beruht auf der Erkenntnis, daß nach dem Auslösen einer Sitzverstelleinrichtung, wie z.B. einer Sitzhöhenverstellung, einer Sitzneigungsverstellung oder einer Sitzkissentiefenverstellung, das Verhalten der Sitzverstelleinrichtung von dem Gewicht des zu verstellenden Sitzteils abhängt. Dieses Gewicht ist wiederum abhängig davon, ob auf dem entsprechenden Sitz eine Person Platz genommen hat.

Mit anderen Worten ausgedrückt, schlägt sich das Gewicht einer auf dem Sitz befindlichen Person unmittelbar auf das Verhalten der Verstelleinrichtung nieder, die zur Verstellung des entsprechenden Sitzes vorgesehen ist. Dieses charakteristische Verhalten der Verstelleinrichtung kann in einfacher Weise ermittelt und als Grundlage für eine Aussage über die Sitzbelegung verwendet werden.

Eine Aussage über die Sitzbelegung kann insbesondere dadurch gemacht werden, daß nach dem Auslösen der Verstelleinrichtung das Verhalten des elektrischen Antriebs (insbesondere des Antriebsmotors) ausgewertet wird.

Hierzu kann zum einen die Stromaufnahme des elektrischen Antriebs nach dem Auslösen der Verstelleinrichtung bestimmt werden. Es ist offensichtlich, daß das Gewicht eines zu verstellenden Sitzteils die Stromaufnahme des elektrischen Antriebs beeinflußt.

Andererseits kann zur Erkennung der Sitzbelegung auch die Drehzahl des Antriebsmotors ausgewertet werden. Bei konstanter Klemmenspannung an dem Antriebsmotor führt eine Änderung des Gewichts des zu verstellenden Sitzteils zu einer Änderung der Drehzahl. Weitere Einzelheiten hierzu werden weiter unten bei der Beschreibung eines Ausführungsbeispiels der Erfindung erläutert werden.

Bei geregelten Antriebseinrichtungen, bei denen durch die Regelung die Geschwindigkeit des Antriebsmotors auf einen bestimmten, vorgegebenen Wert eingestellt wird, kann zur Ermittlung der Sitzbelegung die Stellgröße des Reglers herangezogen werden. Denn bei einer Änderung des Gewichts des zu verstellenden Sitzteils werden andere Regelvorgänge erforderlich, um die Geschwindigkeit des Motors auf den vorgegebenen Wert einzustellen. Diese Änderungen der Regelvorgänge lassen sich anhand der Stellgröße charakterisieren.

Gemäß einer weiteren Variante wird die Belegung eines Sitzes nicht durch die Auswertung des Verhaltens des Antriebsmotors, sondern des Verhaltens eines Verstellelements der Verstelleinrichtung bestimmt. Hierzu können beispielsweise Mittel zur Bestimmung der Geschwindigkeit eines Verstellelements nach dem Auslösen der Verstelleinrichtung vorgesehen sein.

Bei einer besonders bevorzugten Ausführungsform der Erfindung sind die Mittel zur Bestimmung eines charakteristischen Verhaltens der Verstelleinrichtung, das zur Feststellung der Sitzbelegung herangezogen wird, Bestandteil einer Elektronikeinheit, die mit dem Antrieb der Verstelleinrichtung gekoppelt ist. Eine derartige Elektronikeinheit, die eine Vielzahl von Komfortfunktionen eines Sitzes auslösen kann, wird bei elektrischen Sitzverstelleinrichtungen regelmäßig ohnehin zur Steuerung des Antriebs benötigt.

Zur Bestimmung der Sitzbelegung gemäß der Lehre der vorliegenden Erfindung kann nun diese ohnehin vorhandene Elektronikeinheit verwendet werden, mittels der die für die Erkennung der Sitzbelegung relevanten Größen, wie z.B. Motorstrom, Klemmenspannung oder Drehzahl des Motors sowie die Stellgröße eines Reglers unmittelbar berechnet und ausgewertet werden können. Die vorliegende Erfindung erfordert daher keinerlei zusätzliche Bauelemente zur Bestimmung der Sitzbelegung. Es ist lediglich erforderlich, die vorhandene Elektronikeinheit entsprechend zu programmieren.

Zur Erkennung der Sitzbelegung kann eine Vielzahl unterschiedlicher Verstelleinrichtungen des Sitzes herangezogen werden. Grundsätzlich eignet sich hierfür jede Sitzverstelleinrichtung, die von dem Gewicht einer auf dem Sitz befindlichen Person oder Sache beeinflußt wird. Nur beispielhaft seien hier die Sitzlängsverstellung, die Sitzhöhenverstellung, die Neigungsverstellung des Sitzkissens, die Sitzkissentiefenverstellung sowie die Lehnenverstellung des Sitzes genannt.

Zur Bestimmung der Sitzbelegung kann vorgesehen sein, daß nicht nur eine, sondern mehrere Verstelleinrichtungen ausgelöst und anschließend das Verhalten dieser Verstelleinrichtungen ausgewertet wird. Dadurch wird zum einen eine gewisse Redundanz bei der Erkennung der Sitzbelegung erzeugt; zum anderen kann aber hierdurch auch zusätzliche Information über die Belegung des Sitzes hinaus gewonnen werden.

Insbesondere können durch die Auswertung des Verhaltens mehrerer Verstelleinrichtungen nach deren Auslösung die Position und/oder (zumindest grob) die Abmaße einer auf dem Sitz befindlichen Person bestimmt werden.

Ferner läßt sich durch die Auswertung des Verhaltens einer Verstelleinrichtung auch das Gewicht einer auf dem Sitz befindlichen Person ermitteln. So ergaben erste Messungen an Sitzhöhenverstellungen bei Raumtemperatur eine Änderung der Motorfrequenz von etwa 2 Hz pro 10 kg Gewichtsänderung auf der Sitzfläche. Da Änderungen der Motorfrequenz von etwa 0,1 Hz ohne weiteres mit einer geeigneten Elektronikeinheit erkannt werden können, läßt sich das Gewicht eines auf dem Sitz befindlichen Gegenstandes mit einer Genauigkeit von etwa 0,5 kg ermitteln. Zur Erkennung der Sitzbewegung ist dabei sowohl die Auslösung einer Aufwärts- als auch einer Abwärtsbewegung der Sitzhöhenverstellung denkbar.

Ferner kann vorgesehen sein, daß zur Bestimmung des Gewichts einer auf dem Sitz befindlichen Person die räumliche Lage von mechanischen Verstellteilen einer Sitzverstelleinrichtung (z.B. von Verstellhebeln einer Sitzhöhen bzw. -neigungsverstellung) und/oder die Reibungsverhältnisse beim Verstellen des Sitzes auswertbar sind.

Um den Einfluß von Temperaturschwankungen auf das Verhalten einer Sitzverstelleinrichtung zu berücksichtigen, kann im Bereich des Fahrzeugsitzes ein Temperatursensor vorgesehen sein, dessen Ausgangssignal der Einrichtung zur Ermittlung der Sitzbelegung zugeführt wird.

Weiterhin kann die Einrichtung zur Ermittlung der Sitzbelegung mit einem Neigungssensor gekoppelt sein, da das Verhalten der Sitzverstelleinrichtungen und insbesondere der Sitzlängsverstellung von der Neigung des entsprechenden Sitzes und damit von der Neigung des Fahrzeugs, z.B. beim Befahren eines bergigen Geländes, abhängt.

Bei einer bevorzugten Ausführungsform der Erfindung wird zur Erkennung der Sitzbelegung mindestens eine Verstelleinrichtung in bestimmten Situationen automatisch ausgelöst. Hierdurch soll sichergestellt werden, daß nach dem Starten des Fahrzeugs die Belegung der entsprechenden Sitze zuverlässig erkannt wurde. So kann beispielsweise vorgesehen sein, daß jeweils beim Starten des Fahrzeugs bei jedem verstellbaren Fahrzeugsitz mindestens eine Verstelleinrichtung für kurze Zeit ausgelöst wird, um die Belegung der einzelnen Sitze zu untersuchen.

Die Erkennung der Sitzbelegung kann aber auch beim Entriegeln und/oder Öffnen einer Fahrzeugtür und/oder nach dem Schließen aller Fahrzeugtüren erfolgen.

Darüber hinaus kann die Sitzbelegung aber auch dann untersucht werden, wenn eine Sitzverstelleinrichtung von einer auf dem Sitz befindlichen Person ausgelöst wird, um den Sitz bzw. ein Sitzteil in seiner Lage zu verstellen.

Aus Sicherheitsgründen kann es ferner angezeigt sein, eine Sitzbelegungserkennung auch dann durchzuführen, wenn in dem Fahrzeug ein Gurt gelöst bzw. ein Gurt neu geschlossen wurde. Denn dies kann darauf hindeuten, daß eine Person in dem Fahrzeug den Platz gewechselt hat. Vorsichthalber könnten in einem solchen Fall auch sämtliche Airbageinheiten in dem Fahrzeug aktiviert (d.h. für eine mögliche Auslösung bereitgestellt) werden.

Bei einem Auslösen der Sitzverstelleinrichtung, das ausschließlich zum Zweck der Erkennung der Sitzbelegung erfolgt, bleibt die Sitzverstelleinrichtung vorzugsweise nur solange aktiviert, daß eine gerade noch meßbare Verstellung des zu verstellenden Sitzteils erfolgt. Eine solche Verstellung bleibt für eine auf dem Sitz befindliche Person unmerklich.

Nach dem Auslösen der Verstelleinrichtung wird dabei zunächst die sogenannte Systemlose abgefahren, d.h. es findet eine Bewegung des Antriebsmotors und des unmittelbar zugeordneten Verstellgetriebes (Verstellschnecke oder dergleichen) statt, ohne daß sich das zu verstellende Sitzteil bewegt. Erst wenn die Systemlose, die sich beispielsweise durch das Spiel der einzelnen Getriebeteile ergibt, ausgeglichen ist, beginnt das zu verstellende Sitzteil sich zu bewegen. Dies führt zu einer spürbaren Erhöhung des Motorstroms. Nach dem Ausgleich der Systemlosen muß die zur Erkennung der Sitzbelegung ausgelöste Sitzverstellung nur noch für sehr kurze Zeit fortgeführt werden. Sobald die dem Antrieb zugeordnete Elektronikeinheit hinreichend Signale empfangen hat, aus denen die Drehzahl, die Stromaufnahme oder andere charakteristische Werte des Antriebs bestimmt werden können, kann die Verstellbewegung abgebrochen und das entsprechende Sitzteil wieder in seine ursprüngliche Lage zurückgeführt werden. Auf der Grundlage der während dieser kurzen Verstellung ermittelten charakteristischen Werte des Verhaltens der Verstelleinrichtung bestimmt die Elektronikeinheit dann die Belegung des Sitzes.

Bei einer Ermittlung der Drehzahl mittels eines Hall-Sensors genügen beispielsweise schon sehr wenige Signalflanken, um die Drehzahl beim Anfahren des Motors zu bestimmen.

Da das Verhalten einer Verstelleinrichtung nach dem Auslösen des ihr zugeordneten Antriebs auch von Verschleißerscheinungen sowie von Änderungen der Umweltbedingungen (insbesondere hinsichtlich der Reibungsverhältnisse) beeinflußt wird, ist es vorteilhaft, vor der eigentlichen Ermittlung der Sitzbelegung, als Referenzwert das Verhalten der Verstelleinrichtung im unbelasteten Zustand des Sitzes auszuwerten. Dazu kann die entsprechende Verstelleinrichtung vor der Belegung des Sitzes für kurze Zeit ausgelöst und dann wieder in ihren ursprünglichen Zustand zurückbewegt werden.

Derartige Referenzmessungen können beispielsweise durchgeführt werden, wenn das Fahrzeug von außen entriegelt wird (also vor dem Einsteigen in das Fahrzeug) oder verriegelt wird (also nach dem Aussteigen aus dem Fahrzeug).

Weiterhin können zur Überprüfung des Resultats der erfindungsgemäßen Sitzbelegungserkennung Plausibilitätsabfragen durchgeführt werden, z.B. indem geprüft wird, ob bei dem fraglichen Sitz der Gurt geschlossen oder eine Sitzverstellung durchgeführt wurde. Dies kann auch einen Hinweis darauf geben, ob sich auf dem Sitz eine Person oder ein Gegenstand befindet.

Ein Verfahren zur Erkennung der Belegung eines Kraftfahrzeugsitzes, das insbesondere mittels der Einrichtung gemäß Patentanspruch 1 durchgeführt werden kann, ist durch die Merkmale des Patentanspruchs 23 charakterisiert.

Vorteilhafte Ausgestaltungen des Verfahrens ergeben sich aus den Patentansprüchen 24 bis 26.

Weitere Vorteile der Erfindung werden bei der nachfolgenden Beschreibung eines Ausführungsbeispiels anhand der Zeichnung deutlich werden.

Es zeigt:

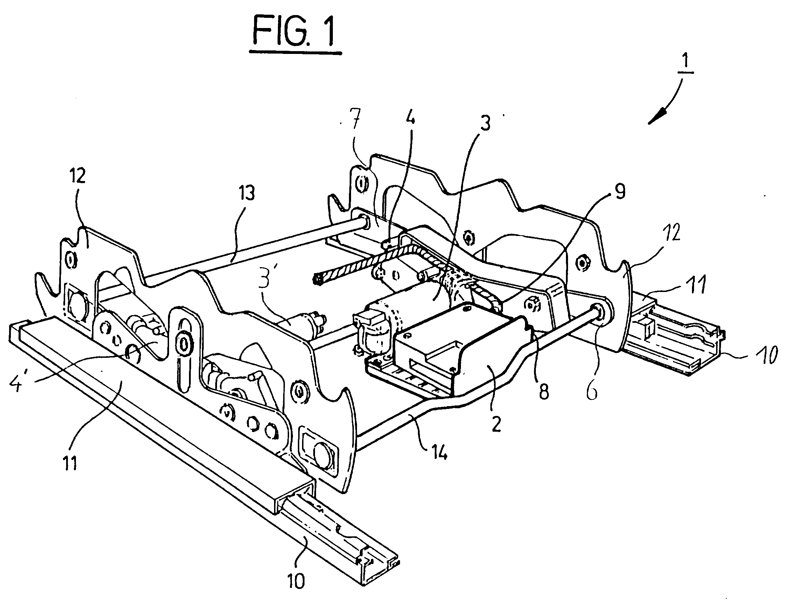

- Fig. 1: ein Sitzgestell eines Kraftfahrzeugsitzes mit mehreren Sitzverstelleinrichtungen.

Das in Fig. 1 schematisch-perspektivisch dargestellte Sitzuntergestell 1 umfaßt als erste Verstelleinrichtung eine Schienenlängsführung 10, 11. Diese besteh aus zwei parallel zueinander angeordneten, entlang beider Sitzlängsseiten verlaufender und mit dem Fahrzeugboden zu verbindender Unterschienen 10 sowie aus zwei in den Unterschienen 10 gleitenden Oberschienen 11.

Die beiden Oberschienen 11 sind jeweils über eine Sitzhöhenverstellung mit einem Sitzseitenteil 12 verbunden. Die Sitzseitenteile 12 dienen zur Aufnahme eines Sitzkissens sowie einer Sitzlehne und lassen sich gegenüber der Schienenlängsführung 10, 11 und damit gegenüber dem Fahrzeugboden in der Höhe verstellen. Von dieser Sitzhöhenverstellung sind in Fig. 1 zwei Hebelarme 6, 7 erkennbar, die einerseits an einer Oberschiene 11 und andererseits an einem Sitzseitenteil 12 angelenkt sind.

Die beiden Sitzseitenteile 12 sind sowohl an ihrem vorderen Ende als auch an ihrem hinteren Ende jeweils über eine Querstrebe 13, 14 miteinander verbunden. Hierdurch wird die Verstellung eines der beiden Sitzseitenteile 12 auf das andere Sitzseitenteil übertragen.

Soweit eine unabhängige Verstellbarkeit der Hebelarme 6, 7 vorgesehen ist, kann mit diesen nicht nur die Sitzhöhe, sondern auch die Sitzneigung eingestellt werden, indem das vordere Ende und das hintere Ende der Sitzseitenteile 12 unabhängig voneinander angehoben bzw. abgesenkt werden.

Der Sitzlängs-, Sitzhöhen- und Sitzneigungsverstellung sind mehrere Antriebsmotoren 3, 3' (von denen in Fig. 1 nur zwei erkennbar sind) sowie zugehörige Verstellgetriebe 4, 4' zugeordnet, mittels derer die einzelnen Verstelleinrichtungen betätigt werden können. Die Verstellgetriebe 4, 4' dienen dabei dazu, die von den Antriebsmotoren 3, 3' erzeugte Antriebskraft auf die Schienenlängsführung 10, 11 bzw. die Hebelarme 6, 7 zu übertragen.

Zur Steuerung der einzelnen Verstelleinrichtungen ist eine Elektronikeinheit 2 vorgesehen, die in einem Elektronikgehäuse 8 angeordnet ist und mittels eines Kabelbaums 9 mit den Antriebsmotoren 3, 3' der einzelnen Verstelleinrichtungen verbunden ist. Diese Elektronikeinheit 2 kann insbesondere auch eine Regeleinrichtung umfassen, die eine Regelung der Antriebsmotoren 3, 3' ermöglicht.

Sitzverstelleinrichtungen der vorgeschriebenen Art sind allgemein bekannt, so daß hier eine nähere Beschreibung des Aufbaus und der Funktion der einzelnen Verstellelemente nicht erforderlich ist.

Erfindungsgemäß werden nun die vorstehend beschriebenen Verstelleinrichtungen genutzt, um die Belegung eines Sitzes zu erkennen, der von dem Sitzuntergestell 1 getragen wird.

Zur Erkennung der Sitzbelegung wird dabei mindestens eine der Verstelleinrichtungen (Sitzlängs-, Sitzhöhen- und/oder Sitzneigungsverstellung) durch Auslösen des entsprechenden Antriebsmotors aktiviert.

Nach dem Auslösen des Antriebsmotors wird die Verstelleinrichtung so lange aktiviert, bis die (z.B. auf toleranzbedingtes Spiel zurückzuführende) Systemlose der Verstelleinrichtung kompensiert ist und eine Bewegung des der Verstelleinrichtung zugeordneten Sitzteiles begonnen hat; also etwa eine Längsbewegung des gesamten Sitzes bei einer Aktivierung der Schienenlängsführung 10, 11, eine Höhenverstellung des gesamten Sitzes bei einer Aktivierung der Sitzhöhenverstellung 6, 7 oder eine Höhenverstellung der Vorderkante bzw. Hinterkante des Sitzkissens bei einer Aktivierung der Sitzneigungsverstellung.

Die Verstellbewegung wird dabei mittels der Elektronikeinheit 2 gesteuert bzw. geregelt. Dabei werden in der Elektronikeinheit ständig die Stromaufnahme und die Klemmenspannung sowie die Drehzahl (die beispielsweise über einen Hallsensor bestimmt werden kann) des Motors ausgewertet. Sofern die Elektronikeinheit 2 für eine Regelung der Antriebsmotoren 3, 3' vorgesehen ist, werden zudem noch die für die Regelung wichtigen Größen, wie z.B. die Stellgröße des Reglers, ausgewertet.

Aus diesen Informationen kann die Elektronikeinheit 2 ohne weiteres ermitteln, ob der auf dem Sitzgestell 1 befestigte Sitz mit einer Person belegt ist. So ist beispielsweise eine größere Stromaufnahme erforderlich, wenn ein Sitz in der Länge verstellt wird, auf dem sich eine Person befindet, als wenn die Lage eines unbelegten Sitzes in entsprechender Weise geändert wird. Gleichermaßen beeinflußt die Belegung eines Sitzes auch die Drehzahl des Antriebsmotors bzw. bei geregelten Motoren insbesondere die Stellgröße der jeweiligen Regeleinrichtung. Als Stellgröße des Reglers eignet sich dabei insbesondere das PWM-Verhältnis oder das Tastverhältnis des PWM-Signals (wobei PWM für Pulsweitenmodulation steht).

Um die Belegung des Sitzes zu erkennen, genügt eine äußerst geringfügige Verstellung eines Sitzteils. Denn sobald das entsprechende Sitzteil beginnt sich zu bewegen, macht sich das Gewicht der auf dem Sitz befindlichen Person bemerkbar. Die Elektronikeinheit 2 erkennt dann sofort, ob der entsprechende Sitz belegt ist. Die Verstellbewegung kann somit abgebrochen und der Sitz wieder in seine ursprüngliche Position zurückgeführt werden. Eine solche geringfügige Sitzverstellung wird von einer auf dem Sitz befindlichen Person überhaupt nicht bemerkt und erzeugt daher auch keine störenden Nebenwirkungen.

Zur Festlegung eines Referenzwertes, der Veränderungen des Verhaltens der Sitzverstelleinrichtung, z.B. aufgrund von veränderten Umweltbedingungen oder aufgrund von Verschleiß, berücksichtigt, kann die Sitzverstelleinrichtung gezielt auch zu solchen Zeitpunkten ausgelöst werden, zu denen sich mit Sicherheit keine Person auf dem entsprechenden Sitz befindet. Hier eignet sich insbesondere ein Auslösen der Sitzverstelleinrichtung beim Öffnen einer Fahrzeugtür von außen, also bevor das Fahrzeug betreten wird.

Parallel zur Bestimmung der Belegung eines Sitzes kann mittels der Elektronikeinheit 2 näherungsweise auch die Größe einer auf dem Sitz befindlichen Person ausgewertet werden, indem beispielsweise die von der jeweiligen Person eingestellte Sitzhöhe und Sitztiefe bzw. Sitzlängsverstellung ausgewertet wird.

Hinsichtlich weiterer Anwendungsmöglichkeiten der vorliegenden Erfindung, beispielsweise durch das Auslösen mehrerer Sitzverstelleinrichtungen sowie hinsichtlich der Ermittlung weiterer Größen, wie z.B. des Gewichtes einer auf dem Sitz befindlichen Person, sei zur Vermeidung von Wiederholungen auf die Beschreibungseinleitung verwiesen.

## Patentansprüche

1. Einrichtung zur Erkennung der Belegung eines Kraftfahrzeugsitzes, der mindestens eine durch einen elektrischen Antrieb betätigbare Verstelleinrichtung umfaßt,
**gekennzeichnet durch**
a) Mittel (2) zum Auslösen der Verstelleinrichtung und
b) Mittel (2) zur Bestimmung eines charakteristischen Verhaltens der Verstelleinrichtung, das von der Belegung des Sitzes abhängig ist.

2. Einrichtung nach Anspruch 1, **dadurch gekennzeichnet,** daß die Mittel (2) zur Bestimmung eines charakteristischen Verhaltens der Verstelleinrichtung Mittel zur Bestimmung eines charakteristischen Verhaltens des elektrischen Antriebs (3, 3') nach dem Auslösen der Verstelleinrichtung (3, 3', 4, 6, 7, 10, 11, 13, 14) umfassen.

3. Einrichtung nach Anspruch 2, **dadurch gekennzeichnet,** daß zur Erkennung der Sitzbelegung die Stromaufnahme des elektrischen Antriebs (3, 3') nach dem Auslösen der Verstelleinrichtung (3, 3', 4, 6, 7, 10, 11, 13, 14) bestimmt wird.

4. Einrichtung nach Anspruch 2, **dadurch gekennzeichnet,** daß zur Erkennung der Sitzbelegung die Klemmenspannung und die Drehzahl des elektrischen Antriebs (3, 3') nach dem Auslösen der Verstelleinrichtung (3, 3', 4, 6, 7, 10, 11, 13, 14) bestimmt werden.

5. Einrichtung nach Anspruch 2, **dadurch gekennzeichnet,** daß der elektrische Antrieb (3, 3') eine Regeleinrichtung umfaßt und daß zur Erkennung der Sitzbelegung eine Stellgröße der Regeleinrichtung ausgewertet wird.

6. Einrichtung nach Anspruch 1, **dadurch gekennzeichnet,** daß die Mittel (2) zur Bestimmung eines charakteristischen Verhaltens der Verstelleinrichtung Mittel zur Bestimmung der Geschwindigkeit eines Verstellelements nach dem Auslösen der Verstelleinrichtung (3, 3', 4, 6, 7, 10, 11, 13, 14) umfassen.

7. Einrichtung nach einem der vorhergehenden Ansprüche, **dadurch gekennzeichnet,** daß die Mittel (2) zur Bestimmung eines charakteristischen Verhaltens der Verstelleinrichtung in einer Elektronikeinheit (8) vorgesehen sind, die an den elektrischen Antrieb (3, 3') gekoppelt ist.

8. Einrichtung nach einem der vorhergehenden Ansprüche, **dadurch gekennzeichnet,** daß zur Erkennung der Sitzbelegung eine Höhenverstellung (6, 7, 13, 14) und/oder eine Neigungsverstellung (6, 7, 13, 14) und/oder eine Längsverstellung (10, 11) eines Sitzteiles (12) und/oder des gesamten Sitzes auslösbar ist.

9. Einrichtung nach einem der vorhergehenden Ansprüche, **gekennzeichnet durch** einen Temperatursensor, dessen Ausgangssignal zur Ermittlung der Sitzbelegung heranziehbar ist.

10. Einrichtung nach Anspruch 9, **dadurch gekennzeichnet,** daß mittels des Ausgangssignals des Temperatursensors die Temperaturabhängigkeit des Verhaltens der Verstelleinrichtung zur Ermittlung der Sitzbelegung heranziehbar ist.

11. Einrichtung nach einem der vorhergehenden Ansprüche, **dadurch gekennzeichnet,** daß zur Erkennung der Sitzbelegung mindestens zwei Verstelleinrichtungen ausgelöst werden und das chrakteristische Verhalten beider Verstelleinrichtungen nach deren Auslösung bestimmt wird.

12. Einrichtung nach einem der vorhergehenden Ansprüche, **dadurch gekennzeichnet,** daß Mittel (2) vorgesehen sind, um auf der Grundlage des Verhaltens der Verstelleinrichtung (3, 3', 4, 6, 7, 10, 11, 13, 14) das Gewicht einer auf dem Sitz befindlichen Person zu bestimmen.

13. Einrichtung nach Anspruch 12, **dadurch gekennzeichnet,** daß zur Bestimmung des Gewichts einer auf dem Sitz befindlichen Person die räumliche Lage von mechanischen Verstellteilen einer Sitzverstelleinrichtung und/oder die Reibungsverhältnisse beim Verstellen des Sitzes auswertbar sind.

14. Einrichtung nach einem der vorhergehenden Ansprüche, **dadurch gekennzeichnet,** daß Mittel (2) vorgesehen sind, um auf der Grundlage des Verhaltens der Verstelleinrichtung (3, 3', 4, 6, 7, 10, 11, 13, 14) die Position einer auf dem Sitz befindlichen Person zu bestimmen.

15. Einrichtung nach einem der vorhergehenden Ansprüche, **dadurch gekennzeichnet,** daß Mittel (2) vorgesehen sind, um auf der Grundlage des Verhaltens der Verstelleinrichtung (3, 3', 4, 6, 7, 10, 11, 13, 14) die Abmaße einer auf dem Sitz befindlichen Person zu bestimmen.

16. Einrichtung nach einem der vorhergehenden Ansprüche, **dadurch gekennzeichnet**, daß zur Erkennung der Sitzbelegung die Verstelleinrichtung (3, 3', 4, 6, 7, 10, 11, 13, 14) automatisch auslösbar ist.

17. Einrichtung nach Anspruch 16, **dadurch gekennzeichnet,** daß die Verstelleinrichtung (3, 3', 4, 6, 7, 10, 11, 13, 14) beim Entriegeln und/oder Öffnen einer Fahrzeugtür und/oder beim Starten des Kraftfahrzeugs und/oder nach dem Schließen aller Fahrzeugtüren ausgelöst wird.

18. Einrichtung nach einem der vorhergehenden Ansprüche, **dadurch gekennzeichnet,** daß bei jedem Auslösen der Verstelleinrichtung (3, 3', 4, 6, 7, 10, 11, 13, 14) ein charakteristisches Verhalten der Verstelleinrichtung bestimmt wird, aus dem die Belegung des Sitzes ermittelbar ist.

19. Einrichtung nach einem der vorhergehenden Ansprüche, **dadurch gekennzeichnet,** daß die Verstelleinrichtung (3, 3', 4, 6, 7, 10, 11, 13, 14) zusätzlich vor einer möglichen Belegung des Sitzes auslösbar ist, um einen Referenzwert für das Verhalten der Verstelleinrichtung zur ermitteln.

20. Einrichtung nach Anspruch 19, **dadurch gekennzeichnet,** daß die Verstelleinrichtung (3, 3', 4, 6, 7, 10, 11, 13, 14) unmittelbar nach dem Entriegeln der dem entsprechenden Sitz zugeordneten Fahrzeugtür automatisch ausgelöst wird.

21. Einrichtung nach einem der vorhergehenden Ansprüche, **dadurch gekennzeichnet,** daß die Verstelleinrichtung (3, 3', 4, 6, 7, 10, 11, 13, 14) nach dem Auslösen zum Zweck der Erkennung der Sitzbelegung automatisch wieder in den Zustand vor dem Auslösen der Verstelleinrichtung zurückgeführt wird.

22. Einrichtung nach einem der vorhergehenden Ansprüche, **dadurch gekennzeichnet,** daß die Verstelleinrichtung (3, 3', 4, 6, 7, 10, 11, 13, 14) nach dem Auslösen zum Zweck der Erkennung der Sitzbelegung solange aktiviert bleibt, bis eine meßbare Verstellung eines zu verstellenden Sitzteiles erfolgt ist.

23. Verfahren zur Erkennung der Belegung eines Kraftfahrzeugsitzes, der mindestens eine durch einen elektrischen Antrieb betätigbare Verstelleinrichtung umfaßt,
**dadurch gekennzeichnet**, daß
a) die Verstelleinrichtung (3, 3', 4, 6, 7, 10, 11, 13, 14) ausgelöst wird und
b) ein charakteristisches Verhalten der Verstelleinrichtung (3, 3', 4, 6, 7, 10, 11, 13, 14) bestimmt wird, das von der Belegung des Sitzes abhängig ist.

24. Verfahren nach Anspruch 23, **dadurch gekennzeichnet,** daß die Verstelleinrichtung (3, 3', 4, 6, 7, 10, 11, 13, 14) zusätzlich vor einer möglichen Belegung des Sitzes ausgelöst wird, um einen Referenzwert für das Verhalten der Verstelleinrichtung zur ermitteln.

25. Verfahren nach Anspruch 23 oder 24, **dadurch gekennzeichnet,** daß die Verstelleinrichtung (3, 3', 4, 6, 7, 10, 11, 13, 14) zur Erkennung der Sitzbelegung nach dem Starten des Fahrzeugs und/oder nach dem Schließen sämtlicher Fahrzeugtüren ausgelöst wird.

26. Verfahren nach einem der Ansprüche 23 bis 25, **dadurch gekennzeichnet,** daß die die Verstelleinrichtung (3, 3', 4, 6, 7, 10, 11, 13, 14) zur Erkennung der Sitzbelegung aufgrund vorgegebener Ereignisse erneut ausgelöst wird.
